# EUROPÄISCHE PATENTSCHRIFT

(11) **EP 1 260 718 B1**
(45) Veröffentlichungstag und Bekanntmachung des Hinweises auf die Patenterteilung: **09.11.2005**
(21) Anmeldenummer: 02011313.0
(22) Anmeldetag: 23.05.2002
(51) Int. Cl.: F16B 5/06

(54) **Bauelement**
Building element
Elément de construction

(30) Priorität: 23.05.2001 DE 20108739 U
(43) Veröffentlichungstag der Anmeldung: 27.11.2002
(73) Patentinhaber: Fitz, Johannes, 83370 Seeon (DE); Schiewe, Rolf, 63128 Dietzenbach (DE)
(72) Erfinder: Fitz, Johannes, 83370 Seeon (DE); Zegenhagen, Walter-B., 63128 Dietzenbach (DE)
(74) Vertreter: Haar, Lucas Heinz Jörn

(56) Entgegenhaltungen:
- FR-A- 2 637 631
- GB-A- 1 037 236
- US-A- 5 448 863
- US-A- 6 148 488

## Beschreibung

Die Erfindung betrifft ein Bauelement mit einem Rahmen, der zwei im wesentlichen parallele und in einem Abstand voneinander angeordnete Stäbe und die Stäbe miteinander verbindende und in einem Abstand voneinander angeordnete Querstege aufweist und mit einem die Rahmenöffnung zumindest teilweise verschließenden Flächenelement, das aus flexiblem Material besteht und zwischen den Stäben außen auf den Rahmen gespannt ist, wobei wenigstens ein Stab eine sich in Längsrichtung erstreckende Ausnehmung mit ihren Rand begrenzenden Längsrippen hat, in der das Flächenelement mit Hilfe eines Spannelements festklemmbar ist.

Bauelemente der angegebenen Art sind beispielsweise zur Verwendung als Raumteiler, Trennwände, Verkleidungs- oder Dekorationselemente von Wänden oder Decken oder als Sonnenschutzblende im Innern oder außen an Gebäuden bestimmt. Das Flächenelement kann hierbei aus einem flexiblen Material, beispielsweise einem Gewebe oder einer Folie bestehen, welches auf den Rahmen aufgespannt ist.

Ein als Trennwand für einen Ausstellungsstand bestimmtes Bauelement der angegebenen Art ist aus FR-A-2 637 631 bekannt. Ein Flächenelement aus einem elastisch verformbaren Gewebe ist hierbei zu einem Schlauch geformt, der den Rahmen auf entgegengesetzten Seiten von außen umgibt. Zum Festspannen des Flächenelementes dient ein stabförmiges, elastisch verformbares Element, das im Durchmesser größer ist als die Öffnung der Ausnehmung und das mit Druck in die Ausnehmung eingebracht wird, um die Ränder des flexiblen Elementes in der Ausnehmung festzuspannen.

Aus US-A-5,448,463 ist ein umhülltes Wandelement bekannt, welches eine stehend, plattenförmige Struktur mit einem am äußeren Rand angeordneten, offenen Kanal aufweist und lose von einer schlauchförmigen, flexiblen Hülle umgeben ist. In dem Kanal ist ein Spannstab angeordnet, um die Hülle dort hineinzudrücken und fest um die Struktur zu spannen. Der Spannstab ist mittels Schrauben an der Struktur befestigt.

Der Erfindung liegt die Aufgabe zugrunde, ein Bauelement der angegebenen Art zu schaffen, bei welchem ein aus flexiblem Material bestehendes Flächenelement leicht zu montieren und auf einfache Weise zu spannen ist.

Diese Aufgabe wird durch die in Patentanspruch 1 angegebene Erfindung gelöst. Vorteilhafte Weiterbildungen der Erfindung sind in den Unteransprüchen angegeben.

Bei der erfindungsgemäßen Gestaltung des Bauelements wird das schlauchförmige Flächenelement zunächst mit einer solchen Umfangslänge hergestellt, daß es sich mühelos die beiden Stäbe umschlingend auf den Rahmen aufziehen läßt. Dort wo das Flächenelement die Ausnehmung in einem der Stäbe überspannt, wird es anschließend mit Hilfe des von außen aufgesetzten Spannelements in die Ausnehmung hineingedrückt und dort festgeklemmt. Hierbei verkürzt sich der den Rahmen umschlingende Teil des Flächenelements soweit, daß das Flächenelement den Rahmen straff gespannt umgibt. Ist zur Erleichterung der Montage des Flächenelements eine größere Spannlänge erwünscht, so können auch beide Stäbe des Rahmens eine Ausnehmung haben, die zum Spannen und Festklemmen des Flächenelements dient. Als Spannelement ist ein zylindrisches Rohr vorgesehen, welches etwa bis zur Hälfte seines Querschnitts mit Hilfe von Spannmitteln, die an dem Stab abgestützt sein können, in die Ausnehmung hineindrückbar ist und zwei auf entgegengesetzten Seiten angeordnete Längsrillen aufweist, in die die den Rand der Ausnehmung begrenzende Längsrippen des Stabes in der Spannstellung des Spannrohres einrasten. Hierdurch wird das Spannrohr in seiner Spannstellung festgehalten und zugleich das Flächenelement festgeklemmt. Als Spannmittel können beispielsweise Schrauben verwendet werden. Der genannten Spannmittel bedarf es nicht, wenn das Spannrohr mit Hilfe einer Montagevorrichtung oder durch Schläge mit einem Hammer in die Spannstellung gebracht wird. Zum Festklemmen des Flächenelements sind in der Ausnehmung Anlageflächen vorgesehen, an die das Flächenelement mit Hilfe des Spannrohrs andrückbar ist.

Zur Erhöhung seiner Quersteifigkeit kann das Spannrohr mit einem Quersteg versehen sein, der den Hohlraum des Spannrohrs in der Mittelebene der Längsrillen durchquert.

Nach einem weiteren Vorschlag der Erfindung kann das Spannrohr einen Längsschlitz haben, durch den eine Schlaufe des Flächenelements in den Hohlraum des Spannrohrs einführbar ist, wobei von außen durch den Schlitz eine Spannleiste in die Schlaufe einbringbar ist, durch die die Schlaufe in dem Hohlraum des Spannrohrs festgehalten wird. Diese Ausgestaltung hat den Vorteil, daß nach der Montage des Flächenelements das Spannrohr von außen nicht mehr sichtbar ist. Weiterhin ist hierbei die Möglichkeit gegeben, ein den Rahmen nur auf einer Seite bedeckendes Flächenelement in gespanntem Zustand an dem Rahmen zu befestigen.

Die Erfindung wird nachfolgend anhand von Ausführungsbeispielen näher erläutert, die in der Zeichnung dargestellt sind. Es zeigen
- Figur 1: eine perspektivische Ansicht eines erfindungsgemäßen, als schwenkbare Sonnenschutzlamelle dienenden Bauelements,
- Figur 2: einen Querschnitt im Bereich eines Stabes des Bauelements gemäß Figur 1,
- Figur 3: einen Querschnitt im Bereich eines Stabes einer zweiten Ausführungsform eines erfindungsgemäßen Bauelements,
- Figur 4: einen Querschnitt im Bereich eines Stabes einer dritten Ausführungsform eines erfindungsgemäßen Bauelements.

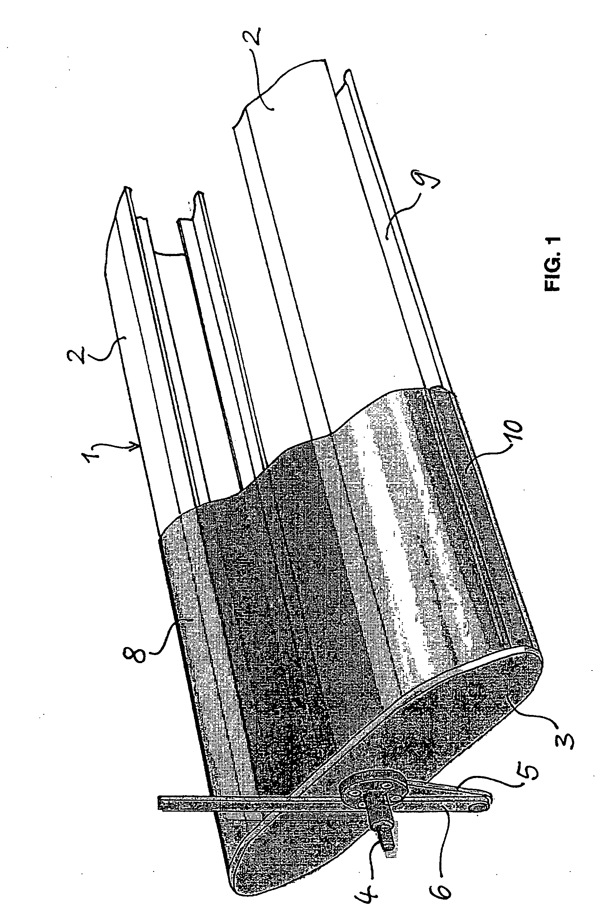

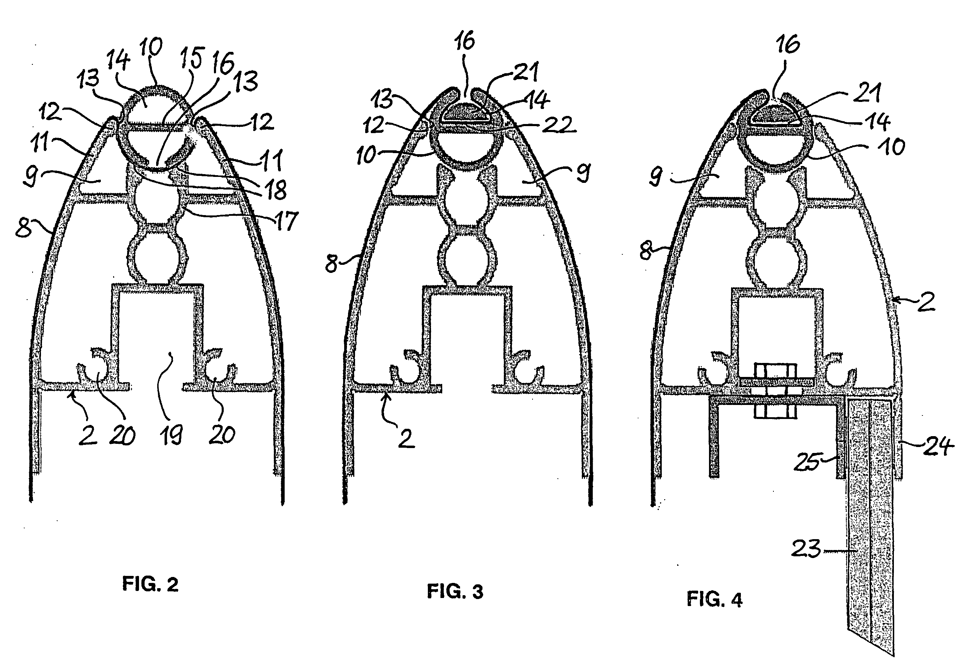

Das in den Figuren 1 und 2 dargestellte Bauelement ist zur Verwendung als drehbar gelagerte Sonnenschutzlamelle bestimmt, die an der Außenseite von Gebäudefassaden angebracht wird. Das Bauelement hat einen rechteckigen Rahmen 1, der aus zwei parallelen Stäben 2 und diese miteinander verbindenden Stegen 3 zusammengesetzt ist. Die Stäbe 2 bestehen aus Hohlprofilen aus Metall, insbesondere Aluminium, und haben einen zur Mittelebene des Rahmens 1 symmetrischen Querschnitt mit zur Rahmenaußenkante hin sich verjüngender Außenkontur. Zueinander sind die Stäbe 2 spiegelbildlich angeordnet. Die Stege 3 haben die Form flacher Platten, die mit Hilfe von nicht näher dargestellten Schrauben an den Stabenden befestigt sind. In ihrer Mitte tragen die Stege 3 einen Lagerzapfen 4 und einen Betätigungshebel 5, der durch ein Gelenk 6 mit einer Betätigungsstange verbunden ist. Der Rahmen 1 ist mit einem Flächenelement 8 bespannt, welches aus einem flexiblen Gewebe besteht und die Form eines Schlauches hat, der den Rahmen 1 im Bereich der Stäbe 2 umschlingt. Zum Spannen des Flächenelements 8 ist in eine Ausnehmung 9 in einem Stab 2 ein Spannelement in Form eines Spannrohrs 10 eingesetzt und durch Klemmen befestigt.

Wie aus Figur 2 zu ersehen wird die Ausnehmung 9 in dem Stab 2 von zwei gegenüberliegenden Wänden 11 begrenzt, die an ihren äußeren, einander gegenüberliegenden Rändern einander zugekehrte, vorspringende Rippen 12 von annähernd halbkreisförmigem Querschnitt tragen. Zwischen den Rippen 12 ist das Spannrohr 10 angeordnet, das in seiner Mantelfläche in einem Umfangsabstand von 180° achsparallele Längsrillen 13 hat, in die die Rippen 12 in der dargestellten Klemmstellung des Spannrohrs 10 einrasten. In dem Hohlraum 14 des Spannrohrs 10 ist ein Quersteg 15 angeordnet, der die Rohrwand zwischen den Längsrillen 13 verbindet und dadurch das Spannrohr 10 in dem durch die Klemmkraft belasteten Bereich versteift. Das Spannrohr 10 weist außerdem in der Mitte zwischen den Längsrillen 13 einen Längsschlitz 16 auf, der sich bei der in Figur 2 gezeigten Anordnung des Spannrohrs 10 innerhalb der Ausnehmung 9 befindet. Beiderseits des Längsschlitzes 16 weist der Stab 2 in der Ausnehmung 9 von einem Längskanal 17 gebildete Anlageflächen 18 auf, die die Eindringtiefe des Spannrohrs 10 begrenzen. Der Längskanal 17 kann zur Aufnahme von Spannelementen dienen, die eine oder mehrere sich quer zur Kanalrichtung erstreckende Gewindebohrungen haben, in die Querbohrungen im Spannrohr 10 durchdringende Spannschrauben einschraubbar sind. Der Stab 2 weist weiterhin einen Rechteckkanal 19 zur Aufnahme von Spannelementen und parallel zu diesem Schraubkanäle 20 auf.

Zum Spannen und Festklemmen des die beiden Stäbe 2 umschlingenden Flächenelements 8 wird das Spannrohr 10 vor der Ausnehmung 9 mit einer geschlitzten Seite außen auf das Flächenelement 8 aufgesetzt und dann durch Aufbringen einer Kraft in die Ausnehmung 9 hineingedrückt. Hierbei wird das Flächenelement 8 in die Ausnehmung 9 hineingezogen, wodurch seine außerhalb der Ausnehmung 9 befindlichen Abschnitte gespannt werden. In der dargestellten Klemmstellung wird das Spannrohr und mit ihm das Flächenelement 8 durch die in die Längsrillen 13 einrastenden Rippen 12 klemmend gehalten. Das Spannrohr 10 kann in dieser Lage zusätzlich an den Stegen 3 und mit Hilfe von Schrauben auch an dem Stab 2 fixiert werden.

Bei dem Bauelement gemäß den Figuren 1 und 2 ist das in die Ausnehmung 9 eingesetzte Spannrohr 10 von außen sichtbar. Figur 3 zeigt ein Ausführungsbeispiel, bei welchem das Spannrohr 10 durch das Flächenelement 8 von außen abgedeckt ist. Hierzu wird das Spannrohr 10 vor dem Aufziehen des flexiblen Flächenelements 8 so in die Ausnehmung 9 eingesetzt, daß der Längsschlitz 16 nach außen zeigt. Die in die Längsrillen 13 eingreifenden Rippen 12 halten das Spannrohr 10 in dieser Lage fest. Anschließend wird das Flächenelement 8 über den Rahmen gezogen, wobei es den Stab 2 und das Spannrohr 10 umgreift. Zum Spannen und Festklemmen des Flächenelements 8 wird dann von außen durch den Längsschlitz 16 eine elastisch verformbare Spannleiste 21 in den Hohlraum 14 des Spannrohrs 10 gedrückt, wobei das von der Spannleiste 21 erfaßte Flächenelement 8 in den Hohlraum 14 hineingezogen und dadurch gespannt wird. Innerhalb des Hohlraums 14 wird die Spannleiste 21 dann in eine Position gedreht, in der sie durch den Schlitz 16 nicht mehr aus dem Hohlraum 14 herausgezogen werden kann, und dadurch die von dem Flächenelement innerhalb des Hohlraums 14 gebildete und die Spannleiste 21 umschlingende Schlaufe 22 in dem Hohlraum 14 festgehalen. Die Spannleiste 21 kann aus einem Elastomer oder einem elastisch verformbaren Kunststoff bestehen und massiv oder hohl ausgeführt sein.

Figur 4 zeigt eine Abwandlung des Ausführungsbeispiels gemäß Figur 3, bei welcher das flexible Flächenelement 8 nur eine Seite des Rahmens bedeckt. Hierbei wird das Flächenelement 8 zunächst an beiden Längsseiten mit Hilfe einer Spannleiste 21 durch den Längsschlitz 16 in dem Hohlraum 14 eines noch nicht montierten Spannrohrs 10 festgeklemmt. Die sich zwischen den Spannrohren 10 erstreckende Länge des Flächenelements 8 wird hierbei so bemessen, daß das Flächenelement 8 nach der Montage der Spannrohre 10 gespannt ist. Die Spannrohre 10 werden dann nacheinander in den jeweiligen Stab 2 eingesetzt, wobei gleichzeitig das Flächenelement 8 gespannt wird. Die Spannrohre 10 können bei diesem Ausführungsbeispiel entweder in der in Figur 4 gezeigten Weise mit nach außen zeigendem Längsschlitz 16 oder auch um 180° gedreht in der Ausnehmung 9 montiert werden, wobei im letzteren Falle das Spannrohr 10 entweder sichtbar oder durch das Flächenelement 8 außen vollständig abgedeckt sein kann. Auf der dem Flächenelement 8 abgekehrten Seite des Rahmens ist bei dem Ausführungsbeispiel gemäß Figur 4 zwischen den Stäben 2 ein starres Flächenelement 23, z.B. eine Kunststoffplatte oder eine Glasscheibe angeordnet, welches jeweils zwischen einer Wand 24 der Stäbe 2 und einer an den Stäben 2 befestigten Halteschiene 25 eingespannt ist.

Erfindungsgemäße Bauelemente der beschriebenen Art können auch vorteilhaft als stehende Wandelemente verwendet werden, wobei die Stäbe 2 vertikal angeordnet sind. Zum Verbinden mehrerer Wandelemente miteinander können hierbei an den Enden der Spannrohre Laschen angeordnet sein, die auf einer Seite zwei im Abstand voneinander angeordnete Zapfen aufweisen. Die Laschen werden jeweils mit einem Zapfen in die offenen Enden des Spannrohrs eines Wandelements und mit dem anderen Zapfen in die offenen Enden des benachbarten Spannrohrs eines zweiten Wandelements eingesetzt und verbinden auf diese Weise nach Art eines Kettenglieds die beiden Wandelemente miteinander. Auch zur Bildung einer hängenden Anordnung von mehreren erfindungsgemäßen Bauelementen, bei der die Stäbe horizontal ausgerichtet sind, können die beschriebenen Laschen zur Verbindung der Bauelemente verwendet werden.

## Patentansprüche

1. Bauelement mit einem Rahmen (1), der zwei im wesentlichen parallele und in einem Abstand voneinander angeordnete Stäbe (2) und die Stäbe (2) miteinander verbindende und in einem Abstand voneinander angeordnete Stege (3) aufweist und mit einem die Rahmenöffnung zumindest teilweise verschließenden Flächenelement (8), das aus flexiblem Material besteht und zwischen den Stäben (2) außen auf den Rahmen (1) gespannt ist, wobei wenigstens ein Stab (2) eine sich in Längsrichtung erstreckende Ausnehmung (9) mit ihren Rand begrenzenden Längsrippen (12) hat, in der das Flächenelement (8) mit Hilfe eines zylindrischen Spannelements (10) festklemmbar ist, **dadurch gekennzeichnet, daß** das zylindrische Spannelement ein Spannrohr (10) ist, welches etwa bis zur Hälfte seines Querschnitts in die Ausnehmung (9) hineindrückbar ist und daß das Spannrohr (10) zwei in einem Umfangsabstand von 180° angeordnete Längsrillen (13) aufweist, in die die den Rand der Ausnehmung (9) begrenzende Längsrippen (12) des einen Stabes (2) in der Spannstellung des Spannrohres (10) einrasten.

2. Bauelement nach Anspruch 1, **dadurch gekennzeichnet, daß** das Flächenelement (8) aus flexiblem Material zu einem Schlauch geformt ist, der den Rahmen (1) im Bereich der Stäbe (2) von außen umgibt.

3. Bauelement nach einem der vorhergehenden Ansprüche, **dadurch gekennzeichnet, daß** das Spannrohr (10) mit Hilfe von Spannmitteln, beispielsweise Schrauben, die an dem einen Stab (2) abgestützt sind, in der Ausnehmung (9) fixiert ist.

4. Bauelement nach einem der vorhergehenden Ansprüche, **dadurch gekennzeichnet, daß** in der Ausnehmung (9) Anlageflächen vorgesehen sind, an die das Flächenelement (8) mit Hilfe des Spannrohrs (10) angedrückt ist.

5. Bauelement nach einem der vorhergehenden Ansprüche, **dadurch gekennzeichnet, daß** das Spannrohr (10) mit einem Quersteg (15) versehen ist, der den Hohlraum (14) des Spannrohrs (10) in der Mittelebene der Längsrillen (13) durchquert.

6. Bauelement nach einem der vorhergehenden Ansprüche, **dadurch gekennzeichnet, daß** das Spannrohr (10) in der Mitte zwischen den Längsrillen (13) einen Längsschlitz (16) hat.

7. Bauelement nach Anspruch 6, **dadurch gekennzeichnet, daß** eine Schlaufe (22) des Flächenelements (8) durch den Längsschlitz (16) in den Hohlraum (14) des Spannrohrs (10) eingeführt ist, wobei von außen durch den Längsschlitz (16) eine Spannleiste (21) in die Schlaufe (22) eingebracht ist, durch welche die Schlaufe (22) in dem Hohlraum (14) des Spannrohrs (10) festgehalten ist.

## Claims

1. Construction element with a frame (1), which comprises two substantially parallel, spaced-apart bars (2) and spaced-apart webs (3) interconnecting the bars (2), and with a sheet-like element (8), which at least partially closes the frame opening and which consists of flexible material and is fixed externally onto the frame (1) between the bars (2), at least one bar (2) having a recess (9), which extends in the longitudinal direction with longitudinal ribs (12) delimiting its edge and in which the sheet-like element (8) may be clamped by means of a cylindrical fixing element (10), **characterised in that** the cylindrical fixing element is a fixing pipe (10), which may be pressed into the recess (9) by up to approximately half of its cross-section, and **in that** the fixing pipe (10) comprises two longitudinal grooves (13), which are arranged with circumferential spacing of 180° and in which the longitudinal ribs (12), which delimit the edge of the recess (9), of one bar (2) latch in the fixing position of the fixing pipe (10).

2. Construction element according to claim 1, **characterised in that** the sheet-like element (8) made of flexible material is formed into a tube which surrounds the frame (1) externally in the region of the bars (2).

3. Construction element according to any one of the preceding claims, **characterised in that** the fixing pipe (10) is fixed in the recess (9) using fixing means, for example screws, which are supported on one bar (2).

4. Construction element according to any one of the preceding claims, **characterised in that** contact surfaces, against which the sheet-like element (8) is pressed by means of the fixing pipe (10), are provided in the recess (9).

5. Construction element according to any one of the preceding claims, **characterised in that** the fixing pipe (10) is provided with a transverse web (15), which passes through the cavity (14) in the fixing pipe (10) in the centre plane of the longitudinal grooves (13).

6. Construction element according to any one of the preceding claims, **characterised in that** the fixing pipe (10) has a longitudinal slot (16) in the centre between the longitudinal grooves (13).

7. Construction element according to claim 6, **characterised in that** a loop (22) of the sheet-like element (8) is introduced into the cavity (14) in the fixing pipe (10) via the longitudinal slot (16), a fixing strip (21), by means of which the loop (22) is held in the cavity (14) in the fixing pipe (10), being placed in the loop (22) from outside through the longitudinal slot (16).

## Revendications

1. Elément de construction avec un cadre (1) présentant deux barres (2) disposées essentiellement parallèles entre elles et à distance l'une de l'autre et des entretoises (3) reliant entre elles les barres (2) et disposées à distance les unes des autres, et avec un élément formant surface (8) fermant au moins en partie l'ouverture du cadre, constitué d'un matériau flexible, et qui est tendu entre les barres (2) à l'extérieur du cadre (1), au moins une barre (1) ayant un évidement (9) s'étendant longitudinalement dont le bord est limité par des nervures longitudinales (12) et dans lequel l'élément formant surface (8) peut être coincé à l'aide d'un élément tendeur (10) cylindrique, **caractérisé en ce que** l'élément tendeur cylindrique est un tube tendeur (10) qui peut être introduit dans l'évidement (9) jusqu'à environ la moitié de sa section transversale et **en ce que** le tube tendeur (10) est muni de deux rainures longitudinales (13) disposées à une distance circonférentielle de 180° dans lesquelles, en position de tension du tube tendeur (10), s'encliquettent les nervures longitudinales (12) limitant le bord de l'évidement (9) de la une barre (2).

2. Elément de construction selon la revendication 1, **caractérisé en ce que** l'élément formant surface (8) constitué d'un matériau flexible est conçu sous la forme d'un tuyau qui entoure de l'extérieur le cadre (1) au niveau des barres (1).

3. Elément de construction selon l'une des revendications précédentes, **caractérisé en ce que** le tube tendeur (10) est fixé dans l'évidement à l'aide de moyens de serrage, par exemple des vis qui sont supportées par la une barre (2).

4. Elément de construction selon l'une des revendications précédentes, **caractérisé en ce que** des surfaces d'appui sont prévues dans l'évidement (9) contre lesquelles peut être appuyé l'élément formant surface (9) à l'aide du tube tendeur (10).

5. Elément de construction selon l'une des revendications précédentes, **caractérisé en ce que** le tube tendeur (10) est muni d'une traverse (15) qui traverse l'espace vide (14) du tube tendeur (10) dans le plan médian des rainures longitudinales (13).

6. Elément de construction selon l'une des revendications précédentes, **caractérisé en ce que** le tube tendeur (10) a une fente longitudinale (16) au milieu entre les rainures longitudinales (13).

7. Elément de construction selon la revendication 6, **caractérisé en ce qu'**une boucle (22) de l'élément formant surface (8) est introduite dans l'espace vide (14) du tube tendeur (10) en passant par la fente longitudinale (16), une tige de tension (21) étant introduite de l'extérieur à travers la fente longitudinale (16) dans la boucle (22) laquelle est maintenue dans l'espace vide (14) du tube tendeur (10) par cette tige.
